(19) Europäisches Patentamt
European Patent Office
Office européen des brevets

(11) **EP 2 412 090 B1**

(12) **EUROPÄISCHE PATENTSCHRIFT**

(45) Veröffentlichungstag und Bekanntmachung des Hinweises auf die Patenterteilung:
**21.11.2018 Patentblatt 2018/47**

(21) Anmeldenummer: **10714172.3**

(22) Anmeldetag: **23.03.2010**

(51) Int Cl.:
*H02P 21/00* (2016.01)　　*H02P 25/024* (2016.01)
*H02P 29/032* (2016.01)

(86) Internationale Anmeldenummer:
**PCT/EP2010/001801**

(87) Internationale Veröffentlichungsnummer:
**WO 2010/108650 (30.09.2010 Gazette 2010/39)**

(54) **ELEKTROMASCHINE, VERFAHREN ZUM BETRIEB EINER FREMDERREGTEN SYNCHRONMASCHINE UND VERWENDUNG EINER FREMDERREGTEN SYNCHRONMASCHINE**

ELECTRIC MACHINE, METHOD FOR OPERATING A SEPARATELY EXCITED SYNCHRONOUS MACHINE AND USE OF A SEPARATELY EXCITED SYNCHRONOUS MACHINE

MACHINE ÉLECTRIQUE, PROCÉDÉ POUR FAIRE FONCTIONNER UNE MACHINE SYNCHRONE À EXCITATION INDÉPENDANTE, ET UTILISATION D'UNE MACHINE SYNCHRONE À EXCITATION INDÉPENDANTE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.03.2009 DE 102009014703**

(43) Veröffentlichungstag der Anmeldung:
**01.02.2012 Patentblatt 2012/05**

(73) Patentinhaber: **SEW-EURODRIVE GmbH & Co. KG 76646 Bruchsal (DE)**

(72) Erfinder:
- **HARTMANN, Matthias**
  **76646 Bruchsal (DE)**
- **LEWANDOWSKI, Marek**
  **71272 Renningen (DE)**
- **HAUCK, Matthias**
  **68723 Schwetzingen (DE)**

(56) Entgegenhaltungen:
| | |
|---|---|
| DE-A1- 3 026 348 | DE-A1- 3 120 797 |
| DE-A1-102007 040 750 | DE-B- 1 053 637 |
| US-A1- 2005 137 834 | US-A1- 2005 212 467 |

**Beschreibung**

Die Erfindung betrifft eine Elektromaschine, ein Verfahren zum Betrieb einer fremderregten Synchronmaschine und eine Verwendung einer fremderregten Synchronmaschine.

Es ist bekannt, dass fremderregte Synchronmaschinen eine Erregerwicklung aufweisen, die Feldspulen umfasst.

Aus der US 2005/137834 A1 ist ein Regelverfahren für einen Generator nach dem Synchronmaschinen-Prinzip bekannt.

Aus der US 2005/0212467 A1 ist ein Synchronmotor bekannt, bei dem bei Ausfall des Erregerfeldes ein Asynchronbetrieb gefahren wird.

Aus der DE 1 053 637 ist eine Schutzeinrichtung für Erregerwicklung von Synchronmaschinen bekannt.

Aus der DE 31 29 797 A1 ist eine Vorrichtung zur Steuerung oder Regelung einer Schenkelpolmaschine mit Vorsteuerung des Erregerstromes bekannt.

Aus der DE 10 2007 040 750 A1 ist ein stromerregter Synchronmotor insbesondere für Fahrzeugantriebe bekannt, wobei die Notlaufeigenschaften durch konstruktiv bedingt erhöhte Reluktanz verbessert werden sollen.

Der Erfindung liegt daher die Aufgabe zugrunde, die Sicherheit in Anlagen zu erhöhen.

Erfindungsgemäß wird die Aufgabe bei der Elektromaschine nach den in Anspruch 7, bei dem Verfahren zum Betrieb einer fremderregten Synchronmaschine nach den in Anspruch 1 und bei der Verwendung einer fremderregten Synchronmaschine nach den in Anspruch 11 angegebenen Merkmalen gelöst.

Wichtige Merkmale bei dem Verfahren zum Betrieb einer fremderregten Synchronmaschine, insbesondere einer umrichtergespeisten fremderregten Synchronmaschine, sind, dass am Rotor der Synchronmaschine Feldspulen angeordnet sind,
wobei die Synchronmaschine bei Nichtbestromung der Feldspulen, insbesondere bei Notbetrieb und/oder bei Erregerfeldausfall, als Reluktanzmotor oder Asynchronmotor betrieben wird.

Von Vorteil ist dabei, dass ein Notbetrieb ausführbar ist, währenddessen auch bei stromlosem Rotor ein Drehmoment erzeugbar ist. Die Regeleinheit muss bei Erkennen des Notbetriebs das verwendete Regelverfahren entsprechend umschalten. Gleiches gilt bei Wiedereinsetzen des Normalbetriebs. Hierbei werden jeweils Modellwerte der verwendeten physikalischen Größen und/oder deren einfache und/oder höhere zeitliche Ableitung übergeben an das andere Regelverfahren.

Bei einer vorteilhaften Ausgestaltung wird ein Ausfall des Erregerfeldes von einer Steuerelektronik erkannt wird und ein von der Steuerelektronik ausgeführte Regelverfahren an die neuen Anforderungen bei Nichtbestromung der Feldspulen, also Reluktanzmotorbetrieb oder Asynchronmaschinenbetrieb, angepasst wird,
insbesondere wobei die Steuerelektronik Ansteuersignale für die Schalter eines Wechselrichters erzeugt, der mit den Statorwicklungen der Synchronmaschine verbunden ist, insbesondere wobei die Steuerelektronik mit Mitteln zur Erfassung des Motorstroms und mit Mitteln zur Erfassung der Motorspannung oder der den Wechselrichter speisenden Spannung, insbesondere Zwischenkreisspannung, verbunden ist. Von Vorteil ist dabei, dass die sowieso vorhandenen Sensoren ausreichen für eine Erkennung und keine zusätzlichen Sensoren notwendig sind. Somit ist das Erkennen des Ausfalls des Erregerfeldes durch bloße Software realisierbar.

Bei einer vorteilhaften Ausgestaltung wird ein Wiedereinsetzen des Erregerfeldes nach dessen Ausfall von einer Steuerelektronik erkannt und das von der Steuerelektronik ausgeführte Regelverfahren an die neuen Anforderungen, also Synchronmaschinenbetrieb, angepasst. Von Vorteil ist dabei, dass wiederum der ursprüngliche Synchronmaschinenbetrieb ausführbar ist und somit ein hoher Wirkungsgrad und eine hohe Leistungsdichte, also auch ein hohes Drehmoment bei geringem Bauvolumen erzeugbar ist.

Bei einer vorteilhaften Ausgestaltung wird der Ausfall des Erregerfeldes dadurch erkannt, dass der Erregerstrom gemessen und die Erregerspannung ermittelt und eine Plausibilitätskontrolle durchgeführt, insbesondere wobei der Ausfall der EMF erkannt wird, insbesondere aus dem Stromregler über die Spannung bei Drehzahl größer Null. Von Vorteil ist dabei, dass der Ausfall in einfacher Weise durch Überwachung von Werten von Modellgrößen ausführbar ist, die beim Regelverfahren sowieso gebildet werden. Somit ist also kein wesentlicher zusätzlicher Rechenaufwand für die Erkennung notwendig.

Bei einer vorteilhaften Ausgestaltung handelt es sich beim Regelverfahren um ein feldorientiertes Verfahren und die Regelverfahrensanpassung wird dadurch realisiert, dass die Sollwerte für den d-Strom, also flussbildenden Stromanteil, an die Anforderungen des jeweils angepassten Regelverfahrens , also Synchronmaschinenbetrieb, Reluktanzmaschinenbetrieb oder Asynchronmaschinenbetrieb, angepasst werden. Von Vorteil ist dabei, dass sehr gute Regeleigenschaften erzielbar sind und auch im Notbetrieb eine geregelte Maschine realisierbar ist.

Bei einer vorteilhaften Ausgestaltung werden die Sollwerte bei erkanntem Feldausfall derart verändert, dass Drehmomentsprünge an der Welle vermieden werden. Von Vorteil ist dabei, dass eine weichere Regelung erreichbar ist, also bessere Regeleigenschaften erreichbar sind.

Bei einer vorteilhaften Ausgestaltung wird als Plausibilitätskontrolle zur Erkennung eines Erregerfeldausfalls überwacht, ob die Erregerverlustleistung innerhalb eines gewissen Toleranzbandes bleibt und der hinfließende Strom näherungsweise den gleichen Betrag hat, wie der zurückfließende. Von Vorteil ist dabei, dass zur Ausführung der Erkennung bloße Software oder alternativ nur eine einfache kostengünstige Hardware notwendig ist.

Bei einer vorteilhaften Ausgestaltung ist im Regelverfahren ein thermisches Motormodell integriert, wobei das thermische Motormodell an die mit der Anpassung des Regelverfahrens ebenfalls angepasst wird. Von Vorteil ist dabei, dass auch die Werte von Modellgrößen, wie Temperatur einer Komponente, wie Blechpaket, Wicklung, Vergussmasse, Gehäuse, übergebbar sind beim Wechseln des Modells. Auf diese Weise ist ein möglichst gutes Nachbilden der realen physikalischen Temperaturen der Maschine ermöglicht, auch wenn das Verfahren mit Temperaturmodell gewechselt wird.

Wichtige Merkmale der Erfindung bei der Elektromaschine sind, dass sie einen Rotor und einen Stator umfasst, wobei der Rotor relativ zum Stator drehbar gelagert ist,
wobei der Stator Statorwicklungen zur Erzeugung eines Drehfeldes umfasst,
wobei der Rotor ein Rotorblechpaket umfasst, an dem in Umfangsrichtung Pole ausgeprägt sind.

Von Vorteil ist dabei, dass ein Reluktanzbetrieb ermöglicht ist, so dass der Rotor in Drehbewegung versetzbar ist, auch wenn die Bestromung der Feldspulen ausfällt.

Bei einer vorteilhaften Ausgestaltung sind die Pole als Schenkel ausgeführt, wobei um mindestens einen der Schenkel eine Spulenwicklung vorgesehen ist, insbesondere wobei die radial äußeren Endbereiche der Schenkel spitz oder verbreitert ausgeführt sind. Von Vorteil ist dabei, dass geeignete Feldverläufe und realisierbar sind und somit geeignetes Regelverhalten vorgebbar ist.

Bei einer vorteilhaften Ausgestaltung sind die Spulenwicklungen von einer elektrischen Anordnung mit unipolarem Strom, insbesondere Gleichstrom, beaufschlagbar, insbesondere wobei die Anordnung eine Sekundärwicklung mit nachgeschaltetem Gleichrichter umfasst, aus dem die Spulenwicklungen versorgbar sind, und eine induktiv mit der Sekundärwicklung gekoppelte Primärwicklung aufweist, die mit dem Stator drehfest verbunden ist. Von Vorteil ist dabei, dass der Rotor berührungslos versorgbar ist mit elektrischer Energie, die zur Bestromung der Feldspulen verwendbar ist.

Bei einer vorteilhaften Ausgestaltung ist die Elektromaschine eine fremderregte Synchronmaschine. Von Vorteil ist dabei, dass bekannte Betriebsweisen für den Normalbetrieb ausführbar sind.

Bei einer vorteilhaften Ausgestaltung weist der Rotor einen Dämpferkäfig auf. Von Vorteil ist dabei, dass eine höhere Stabilität bei Normalbetrieb erreichbar ist. Außerdem ist der Notbetrieb, also bei Nichtbestromung der Feldspulen, durch eine Betriebsweise unterstützbar, die dem Asynchronmotor entspricht.

Bei einer vorteilhaften Ausgestaltung sind am Rotor in Umfangsrichtung mit Spulenwicklung umwickelte Pole und Pole ohne Umwicklung abwechselnd angeordnet. Insbesondere ist am Rotor in Umfangsrichtung die Anzahl der Pole geringer oder höher als die Zahl der Feldspulen. Von Vorteil ist dabei, dass verbesserte Regeleigenschaften und ein verbesserter Wirkungsgrad erzielbar sind.

Wichtige Merkmale der Erfindung bei der Verwendung einer fremderregten Synchronmaschine sind, dass die Synchronmaschine bei Nichtbestromung der Feldspulen als Reluktanzmotor verwendet und betrieben wird. Von Vorteil ist dabei, dass dieselbe Maschine in verschiedenen Betriebsweisen verwendbar ist und somit verschiedene Regelungsverfahren angewendet werden für die verschiedenen Betriebsweisen. Im Folgenden werden Ausführungsbeispiele beschrieben:
Die erfindungsgemäße Elektromaschine weist einen Stator auf, mit dessen Statorwicklungen ein Drehfeld erzeugt wird. Hierzu ist die Wicklung vorzugsweise als Drehstromwicklung ausgeführt. Dabei wird die Statorwicklung aus einem Wechselrichter gespeist, dessen Schalter entsprechende pulsweitenmodulierte Ansteuersignale von einer Steuerelektronik erhalten.

Die Steuerelektronik umfasst vorzugsweise eine Regeleinheit, die gemäß einem Maschinenmodell arbeitet. Vorzugsweise werden die hierzu notwendigen Größen, wie beispielsweise der gemessene Statorstromraumzeiger und der zu stellende Statorspannungsraumzeiger in einem rotorflussorientierten Koordinatensystem dargestellt, dessen orthogonal zueinander ausgerichtete Achsen parallel zum momentbildenden Stromanteil beziehungsweise zum flussbildenden Stromanteil ausgerichtet sind.

Der Statorinduktivität ist nicht-isotrop. Daher sind die Komponenten der Statorinduktivität bei Darstellung im rotorflussorientierten Koordinatensystem unterschiedlich. Insbesondere ist die Induktivität in Richtung der beiden Achsen des Koordinatensystems unterschiedlich, wodurch der Rotor aufgrund des Reluktanzprinzips in Drehbewegung versetzbar ist.

Die Elektromaschine ist mittels der Speisung durch den Wechselrichter im Vier-Quadranten-Betrieb betreibbar, insbesondere generatorisch oder motorisch.

Der relativ zum Stator drehbar gelagerte Rotor der Elektromaschine trägt eine aus Feldspulen zusammengesetzte Erregerwicklung und umfasst ein Blechpaket auf, das in Umfangsrichtung Pole hat. Vorzugsweise sind die Pole mittels radial sich erstreckender Schenkelbereiche ausgeprägt, wobei die Schenkel an ihrem äußeren radialen Endbereich spitz ausgeführt sind.

Der die Erregerwicklung tragende Rotor ist gegenüber dem die Drehstromwicklung tragenden Stator drehbar gelagert.

Die Anzahl der Pole entlang dem Umfang des Rotors ist auf die Anzahl und Art der Statorwicklungen derart abgestimmt, dass das Rotorblechpaket in Drehbewegung versetzbar ist aufgrund seiner Reluktanz, insbesondere aufgrund seiner winkelabhängigen Reluktanz.

Um mindestens einen der Schenkel ist eine Spulenwicklung vorgesehen, die bestrombar angeordnet ist und somit Feldspulen darstellen.

Somit ist die Elektromaschine vorzugsweise als fremderregte Synchronmaschine ausführbar.

Bei Bestromung der Feldspulen der Erregerwicklung, vorzugsweise bei einer Bestromung der Feldspulen mit jeweils unipolarem Strom, insbesondere Gleichstrom, ist eine Betriebsweise entsprechend einer Synchronmaschine ausführbar.

Bei Ausfall der Bestromung oder bei sonstiger Nicht-Bestromung der Feldspulen ist eine Drehbewegung aufgrund der Reluktanz erzeugbar.

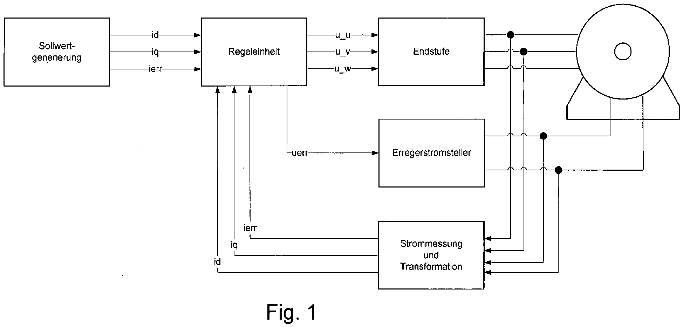

Wichtig ist bei dem erfindungsgemäßen Ausführungsbeispiel nach Figur 1, dass es sich bei der elektrischen Maschine um eine fremderregte Synchronmaschine handelt und der Rotor so ausgeführt ist, dass auch bei Erregerfeldausfall Drehmoment erzeugbar ist, insbesondere gemäß der Gleichung:

$$M = \frac{3}{2} \cdot Z_P \cdot \left\{ \Psi_d \cdot i_q - \Psi_q \cdot i_d \right\} \tag{1}$$

wobei

$i_d$ der flussbildende Stromanteil,

$i_q$ der momentbildende Stromanteil,

$Z_P$ Polpaarzahl, also die Anzahl der Paare der Feldspulen am Umfang des Rotors,

$\Psi_d$ Komponente des Statorflusses in Richtung des flussbildenden Stromanteils,

$\Psi_q$ Komponente des Statorflusses in Richtung des flussbildenden Stromanteils

und M das Drehmoment bedeutet.

An der Elektromaschine ist auch ein Winkelsensor vorgesehen, der die Winkellage des Rotors zum Stator bestimmbar macht. Die entsprechenden Signale werden wie auch die erfassten Strommesswertsignale einer Einheit "Strommessung und Transformation " zugeführt, die aus den erfassten Strommesswerten den flussbildenden und momentbildendenden Stromanteil bestimmt. Diese werden der Regeleinheit zugeführt, der auch aus der Einheit "Sollwertgenerierung" die zugehörigen Sollwerte zugeführt werden. Die Regeleinheit bestimmt dann, insbesondere aus der Differenz zwischen Sollwerten und Istwerten, die zu stellende Motorspannung. Diese wird aus einer unipolaren Spannung, insbesondere Zwischenkreisspannung, durch getakteten, insbesondere pulsweitenmodulierten Betrieb der Schalter der Endstufe erzeugt und daraus die Statorwicklung des Motors gespeist. Die Regeleinheit berücksichtigt außerdem ein Motormodell.

Vorteiligerweise ist das die Erregerwicklung tragende Joch so ausgeführt, dass die Drehstromwicklung unterschiedliche Induktivitäten in Längsrichtung $L_d$ und Querrichtung $L_q$ hat so dass der weitere Betrieb über das Reluktanzmoment möglich ist, beziehungsweise der die Erregerwicklung tragende Teil eine kurzgeschlossene Wicklung, also eine Dämpferwicklung enthält und die Maschine sich dann als Asynchronmaschine betreiben lässt.

Bei der Erfindung erkennt die Regeleinheit der Maschine den Feldausfall selbsttätig und passt das Regelverfahren so an, dass das Reluktanzmoment genutzt wird bzw. die Maschine als Asynchronmaschine weiter betrieben wird.

Zur Realisierung des Asynchronmaschinenbetriebs ist ein Kurzschlusskäfig auf dem Rotor vorgesehen, der vorzugsweise im gleichen axialen Bereich wie auch Feldspulen vorgesehen ist.

Bei weiteren alternativen erfindungsgemäßen Ausführungsbeispielen wird statt des spitzen Endbereichs der Endbereich verbreitert oder mit mehreren Enden ausgeführt.

Bei einem weiteren erfindungsgemäßen Ausführungsbeispiel weist die Elektromaschine einen Dämpferkäfig auf, also einen Kurzschlusskäfig, wie auch von Asynchronmaschinen her bekannt. Somit ist einen stabilere Betriebsweise ermöglicht. Außerdem ist bei Ausfall der Bestromung oder bei sonstiger Nicht-Bestromung der Feldspulen eine Betriebsweise gemäß dem Prinzip des Asynchronmotors ermöglicht, wobei die Ausformung des Dämpferkäfigs im Rotorblechpaket zur Ausprägung der Pole und somit zur Ausprägung der Reluktanz beiträgt.

Bei weiteren erfindungsgemäßen Ausführungsbeispielen ist statt des Stators der Rotor stationär, also drehfest mit der Umgebung verbunden.

**Patentansprüche**

1. Verfahren zum Betrieb einer umrichtergespeisten fremderregten Synchronmaschine,
wobei am Rotor der Synchronmaschine Feldspulen angeordnet sind,
wobei die Synchronmaschine bei Nichtbestromung der Feldspulen, insbesondere bei Notbetrieb und/oder bei Erregerfeldausfall, als Reluktanzmaschine betrieben wird,
wobei ein Ausfall des Erregerfeldes von einer Steuerelektronik erkannt wird und ein von der Steuerelektronik ausgeführtes Regelverfahren an die neuen Anforderungen bei Nichtbestromung der Feldspulen, also Reluktanzmaschinenbetrieb, angepasst wird,
**dadurch gekennzeichnet, dass**
ein Wiedereinsetzen des Erregerfeldes nach dessen Ausfall von einer Steuerelektronik erkannt wird und das von der Steuerelektronik ausgeführte Regelverfahren an die neuen Anforderungen, also Synchronmaschinenbetrieb, angepasst wird,
wobei der Ausfall des Erregerfeldes dadurch erkannt wird, dass der Erregerstrom (ierr) gemessen und die Erregerspannung (uerr) ermittelt wird und eine Plausibilitätskontrolle durchgeführt wird,
wobei Stromsollwerte bei erkanntem Feldausfall derart verändert werden, dass Drehmomentsprünge an der Welle vermieden werden,
wobei als Plausibilitätskontrolle zur Erkennung eines Erregerfeldausfalls überwacht wird, ob die Erregerverlustleistung innerhalb eines gewissen Toleranzbandes bleibt und der hinfließende Strom näherungsweise den gleichen Betrag hat, wie der zurückfließende.

2. Verfahren nach Anspruch 1,
**dadurch gekennzeichnet, dass**
die Steuerelektronik Ansteuersignale für die Schalter eines Wechselrichters erzeugt, der mit den Statorwicklungen der Synchronmaschine verbunden ist, insbesondere wobei die Steuerelektronik mit Mitteln zur Erfassung des Motorstroms und mit Mitteln zur Erfassung der Motorspannung oder der den Wechselrichter speisenden Spannung, insbesondere Zwischenkreisspannung, verbunden ist.

3. Verfahren nach mindestens einem der vorangegangenen Ansprüche,
**dadurch gekennzeichnet, dass**
der Ausfall der EMF aus dem Stromregler über die Spannung erkannt wird,.

4. Verfahren nach mindestens einem der vorangegangenen Ansprüche,
**dadurch gekennzeichnet, dass**
es sich beim Regelverfahren um ein feldorientiertes Verfahren handelt und die Regelverfahrensanpassung dadurch realisiert wird, dass die Sollwerte für den d-Strom, also flussbildenden Stromanteil, an die Anforderungen des jeweils angepassten Regelverfahrens, also Synchronmaschinenbetrieb oder Reluktanzmaschinenbetrieb, angepasst werden.

5. Verfahren nach mindestens einem der vorangegangenen Ansprüche,
**dadurch gekennzeichnet, dass**
im Regelverfahren ein thermisches Motormodell integriert ist, wobei das thermische Motormodell an die mit der Anpassung des Regelverfahrens ebenfalls angepasst wird.

6. Verfahren nach mindestens einem der vorangegangenen Ansprüche,
**dadurch gekennzeichnet, dass**
der Rotor ausgeprägte Pole aufweist.

7. Elektromaschine zur Durchführung eines Verfahrens nach mindestens einem der vorangegangenen Ansprüche,
umfassend einen Rotor und einen Stator,
wobei der Rotor relativ zum Stator drehbar gelagert ist,
wobei der Stator Statorwicklungen zur Erzeugung eines Drehfeldes umfasst,
**dadurch gekennzeichnet, dass**
der Rotor ein Rotorblechpaket umfasst, an dem in Umfangsrichtung Pole ausgeprägt sind,
wobei am Rotor in Umfangsrichtung mit Spulenwicklung umwickelte Pole und Pole ohne Umwicklung abwechselnd angeordnet sind
und wobei am Rotor in Umfangsrichtung die Anzahl der Pole geringer oder höher ist als die Zahl der Feldspulen.

**8.** Elektromaschine nach mindestens einem der vorangegangenen Ansprüche,
**dadurch gekennzeichnet, dass**
die Pole als Schenkel ausgeführt sind, wobei um mindestens einen der Schenkel eine Spulenwicklung vorgesehen ist, insbesondere wobei die radial äußeren Endbereiche der Schenkel spitz oder verbreitert ausgeführt sind.

**9.** Elektromaschine nach mindestens einem der vorangegangenen Ansprüche,
**dadurch gekennzeichnet, dass**
die Spulenwicklungen von einer elektrischen Anordnung mit unipolarem Strom, insbesondere Gleichstrom, beaufschlagbar sind, insbesondere wobei die Anordnung eine Sekundärwicklung mit nachgeschaltetem Gleichrichter umfasst, aus dem die Spulenwicklungen versorgbar sind, und eine induktiv mit der Sekundärwicklung gekoppelte Primärwicklung aufweist, die mit dem Stator drehfest verbunden ist.

**10.** Elektromaschine nach mindestens einem der vorangegangenen Ansprüche,
**dadurch gekennzeichnet, dass**
die Elektromaschine eine fremderregte Synchronmaschine ist
und/oder dass
der Rotor einen Dämpferkäfig aufweist, insbesondere zur Betriebsweise des Motors nach dem Asynchronmotorprinzip.

**11.** Verwendung einer fremderregten Synchronmaschine nach Anspruch 7 für den geregelten Betrieb,
**dadurch gekennzeichnet, dass**
die Synchronmaschine bei Nichtbestromung der Feldspulen als Reluktanzmotor im geregelten Betrieb verwendbar und betreibbar ist.

**Claims**

**1.** A method for operating a converter-fed, separately-excited synchronous machine,
wherein field coils are arranged at the rotor of the synchronous machine,
wherein the synchronous machine in the event of non-energisation of the field coils, in particular in the event of emergency operation and/or in the event of excitation-field failure, is operated as a reluctance machine,
wherein failure of the excitation field is recognised by control electronics and a control process performed by the control electronics is adapted to the new requirements in the event of non-energisation of the field coils, i.e. reluctance machine operation,
**characterised in that**
reinstatement of the excitation field after failure thereof is recognised by control electronics and the control process performed by the control electronics is adapted to the new requirements, i.e. synchronous machine operation,
the failure of the excitation field being recognised **in that** the excitation current (ierr) is measured and the excitation voltage (uerr) is determined and a plausibility check is carried out,
with desired current values in the event of a field failure being recognised being changed such that torque steps at the shaft are avoided,
wherein as a plausibility check for recognising the failure of an excitation field it is monitored whether the excitation power loss remains within a certain tolerance band and the current flowing away is of approximately the same magnitude as that flowing back.

**2.** A method according to Claim 1,
**characterised in that**
the control electronics generate control signals for the switches of an inverter which is connected to the stator windings of the synchronous machine, in particular with the control electronics being connected to means for detecting the motor current and to means for detecting the motor voltage or the voltage supplying the inverter, in particular DC-link voltage.

**3.** A method according to at least one of the preceding claims,
**characterised in that**
the failure of the EMF is recognised from the current controller by means of the voltage.

**4.** A method according to at least one of the preceding claims,
**characterised in that**

the control process is a field-oriented process and the adaptation of the control process is realised **in that** the desired values for the d-current, i.e. flux-generating current component, are adapted to the requirements of the control process which is adapted in each case, i.e. synchronous machine operation or reluctance machine operation.

5. A method according to at least one of the preceding claims,
**characterised in that**
a thermal motor model is integrated in the control process, the thermal motor model likewise being adapted to the with the adaptation of the control process.

6. A method according to at least one of the preceding claims,
**characterised in that**
the rotor has salient poles.

7. An electric machine for carrying out a method according to at least one of the preceding claims,
comprising a rotor and a stator,
wherein the rotor is mounted rotatably relative to the stator,
wherein the stator comprises stator windings for generating a rotating field, **characterised in that**
the rotor comprises a laminated rotor core on which poles are salient in the peripheral direction,
with poles wound with coil winding and non-wound poles being arranged alternately at the rotor in the peripheral direction
and with the number of the poles being smaller or greater than the number of the field coils at the rotor in the peripheral direction.

8. An electric machine according to at least one of the preceding claims,
**characterised in that**
the poles are embodied as limbs, with a coil winding being provided around at least one of the limbs, in particular with the radially outer end regions of the limbs being embodied tapered or widened.

9. An electric machine according to at least one of the preceding claims, **characterised in that**
the coil windings can be supplied with unipolar current, in particular direct current, from an electrical arrangement, in particular with the arrangement comprising a secondary winding with subsequent rectifier, from which the coil windings can be supplied, and having a primary winding inductively coupled with the secondary winding, which primary winding is connected non-rotatably to the stator.

10. An electric machine according to at least one of the preceding claims, **characterised in that**
the electric machine is a separately-excited synchronous machine and/or **in that**
the rotor has an amortisseur, in particular for the mode of operation of the motor in accordance with the asynchronous motor principle.

11. Use of a separately-excited synchronous machine according to Claim 7 for controlled operation,
**characterised in that**
the synchronous machine in the event of non-energisation of the field coils can be used and operated as a reluctance motor in controlled operation.

## Revendications

1. Procédé de fonctionnement d'une machine synchrone à excitation séparée alimentée par un variateur,
dans lequel des bobines de champ sont disposées sur le rotor de la machine synchrone, dans lequel la machine synchrone fonctionne comme une machine à réluctance lorsque les bobines de champ ne sont pas alimentées, en particulier en cas de fonctionnement d'urgence et/ou de défaillance du champ d'excitation,
dans lequel une défaillance du champ d'excitation est détectée par une électronique de commande et un procédé de régulation exécuté par l'électronique de commande est adapté aux nouvelles exigences lorsque les bobines de champ ne sont pas alimentées, c'est-à-dire lors du fonctionnement comme machine à réluctance,
**caractérisé en ce**
**qu'**une reprise du champ d'excitation après sa défaillance est détectée par l'électronique de commande et le procédé de commande exécuté par l'électronique de commande est adapté aux nouvelles exigences, c'est-à-dire au fonctionnement comme machine synchrone,

dans lequel la défaillance du champ d'excitation est détectée en mesurant le courant d'excitation (ierr), en déterminant la tension d'excitation (uerr) et en effectuant un contrôle de plausibilité,

dans lequel, lorsqu'une défaillance du champ est détectée, des valeurs de consigne de courant sont modifiées de manière à éviter des sauts de couple sur l'arbre,

dans lequel, en tant que contrôle de plausibilité pour la détection d'une défaillance d'un champ d'excitation, il est surveillé si la perte de puissance de l'excitateur reste dans une certaine bande de tolérance et si le courant d'aller a approximativement la même valeur que le courant de retour.

**2.** Procédé selon la revendication 1,
**caractérisé en ce que** l'électronique de commande génère des signaux de commande pour les commutateurs d'un onduleur qui est connecté aux enroulements de stator de la machine synchrone, en particulier l'électronique de commande étant connectée à des moyens pour détecter le courant de moteur et à des moyens pour détecter la tension de moteur ou la tension d'alimentation de l'onduleur, en particulier la tension de circuit intermédiaire.

**3.** Procédé selon au moins l'une des revendications précédentes,
**caractérisé en ce que** la défaillance du champ électromagnétique est détectée à partir du régulateur de courant par l'intermédiaire de la tension.

**4.** Procédé selon au moins l'une des revendications précédentes,
**caractérisé en ce que** le procédé de régulation est un procédé à champ orienté et l'adaptation du procédé de régulation est réalisée en adaptant les valeurs de consigne pour le courant d, c'est-à-dire la composante de courant formant le flux, aux exigences du procédé de régulation adapté respectif, c'est-à-dire le fonctionnement comme machine synchrone ou le fonctionnement comme machine à réluctance.

**5.** Procédé selon au moins l'une des revendications précédentes,
**caractérisé en ce qu'**un modèle de moteur thermique est intégré dans le procédé de régulation, le modèle de moteur thermique étant également adapté lors de l'adaptation du procédé de régulation.

**6.** Procédé selon au moins l'une des revendications précédentes,
**caractérisé en ce que** le rotor présente des pôles saillants.

**7.** Machine électrique pour mettre en oeuvre un procédé selon au moins l'une des revendications précédentes, comprenant un rotor et un stator,
dans lequel le rotor est monté rotatif par rapport au stator,
dans lequel le stator comprend des enroulements de stator pour générer un champ tournant,
**caractérisé en ce que**
le rotor comprend un empilement de tôles de rotor duquel des pôles font saillie dans la direction circonférentielle, dans lequel les pôles entourés par un enroulement de bobine et les pôles sans enroulement de bobine sont disposés en alternance sur le rotor dans la direction circonférentielle
et dans lequel le nombre de pôles dans la direction circonférentielle du rotor est inférieur ou supérieur au nombre de bobines de champ.

**8.** Machine électrique selon au moins l'une des revendications précédentes, **caractérisée en ce que** les pôles sont réalisés sous la forme de branches, un enroulement de bobine étant prévu autour d'au moins une des branches, en particulier les zones d'extrémité radialement extérieures des branches étant effilées ou élargies.

**9.** Machine électrique selon au moins l'une des revendications précédentes, **caractérisée en ce que** les enroulements de bobine peuvent être soumis à un courant unipolaire, en particulier un courant continu, par un agencement électrique, en particulier dans laquelle l'agencement comprend un enroulement secondaire avec redresseur en aval, à partir duquel les enroulements de bobine peuvent être alimentés, et présente un enroulement primaire qui est couplé par induction à l'enroulement secondaire et relié de manière solidaire en rotation au stator.

**10.** Machine électrique selon au moins l'une des revendications précédentes,
**caractérisée en ce que** la machine électrique est une machine synchrone à excitation séparée et/ou **en ce que** le rotor présente une cage d'amortissement, en particulier pour le fonctionnement du moteur selon le principe du moteur asynchrone.

**11.** Utilisation d'une machine synchrone à excitation séparée selon la revendication 7 pour le fonctionnement régulé,

**caractérisée en ce que** la machine synchrone peut être utilisée et fonctionner comme un moteur à réluctance en fonctionnement régulé lorsque les bobines de champ ne sont pas alimentées.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050137834 A1
- US 20050212467 A1
- DE 1053637
- DE 3129797 A1
- DE 102007040750 A1